# EUROPEAN PATENT APPLICATION

(11) **EP 4 825 474 A1**
(43) Date of publication of application: **21.10.2026**
(21) Application number: 25178196.9
(22) Date of filing: 22.05.2025
(51) Int. Cl.: B01D 53/62

(54) **LOW-ENERGY MARITIME DIRECT AIR CAPTURE AND OCEAN CARBON SEQUESTRATION SYSTEM**

(30) Priority: 18.04.2025 KR 20250050932
(71) Applicant: Korea Institute of Ocean Science & Technology, Busan 49111 (KR)
(72) Inventor: KANG, Hee Jin, 32837 GYERYONG-SI (KR); HONG, Jang Pyo, 34686 DAEJEON (KR)
(74) Representative: EP&C

(57) **Abstract**

An energy-saving offshore direct air capture and ocean carbon sequestration system is described. The system includes an air inlet (10) that is installed with an opening facing the wind direction, including the bow of the vessel, to allow external air to enter the system through headwinds while the vessel is sailing. The air inlet is connected to a regeneration chamber that receives the external air flowing through the air inlet. Inside the regeneration chamber (20), there is an adsorbent module (21) that captures CO2 from the incoming air. The system also includes an alkali injection device (40) that supplies an alkali substance, a reaction unit (50) that stores some ballast water and receives CO2 captured from the regeneration chamber through piping and alkali substances from the alkali injection device, a ballast water tank (60) connected to the reaction unit that receives CO2-infused ballast water, an electrolytic ballast water treatment device (70) that neutralizes the CO2-infused ballast water in the ballast water tank, a water quality sensor module (80) that measures the acidity of the CO2-infused ballast water in the ballast water tank, and a control device (90) that, when the measured acidity satisfies a pre-set standard, discharges the neutralized ballast water from the ballast water tank into the sea outside the vessel through a discharge port (61).

## Description

### CROSS REFERENCE TO RELATED APPLICATION

The present application claims priority to Korean Patent Application No. 10-2025-0050932 (April 18, 2025.), filed, the entire contents of which are incorporated herein for all purposes by this reference.

### BACKGROUND

### Technical Field

The present invention relates to an energy-saving offshore direct air capture and ocean carbon sequestration system.

### Description of Related Technology

Conventional carbon capture technologies are mainly limited to land-based stationary facilities and are difficult to apply to mobile platforms such as ships, or they consume excessive energy, thus posing limitations for commercial application. In particular, the process of collecting air using a fan during carbon capture requires high driving power, and the storage and handling of CO₂ after capture is difficult, resulting in technical challenges that hinder economic feasibility.

Accordingly, it was intended to capture air without a fan in the windward area encountered during navigation by utilizing a ship, which is a large structure sailing on the sea, and to dissolve the captured CO₂ into the ocean through neutralization. In this process, in order to ensure high carbon capture efficiency, copper components applied to the adsorbent or substances such as NaOH used in the process of neutralizing CO₂ into bicarbonate may cause marine pollution, thereby requiring a technical solution to this issue.

### Prior Art Literature

### Patent Document

Korean Patent Application Registration No. 10-1888684 (August 8, 2018)

### SUMMARY

The present invention is intended to provide an energy-saving offshore direct air capture and ocean carbon sequestration system that captures CO₂ from the air using headwinds during ship navigation and dissolves the captured CO₂ into seawater by utilizing the ship's ballast water.

According to one aspect of the present invention, an energy-saving offshore direct air capture and ocean carbon sequestration system is disclosed.

According to an embodiment of the present invention, an energy-saving offshore direct air capture and ocean carbon sequestration system comprises: an air inlet portion installed such that its opening faces the wind direction, including the bow of the ship, and allowing external air to be introduced inside by means of the headwind during navigation of the ship, a regeneration chamber connected to the air inlet portion and receiving external air introduced through the air inlet portion, an adsorbent module installed inside the regeneration chamber for capturing CO₂ from the air, an alkali injection device for supplying an alkali substance, a reaction unit that stores part of the ballast water, receives the captured CO₂ from the regeneration chamber via piping, and is supplied with the alkali substance from the alkali injection device, a ballast water tank connected to the reaction unit and receiving the ballast water into which CO₂ has been injected from the reaction unit, an electrolytic ballast water treatment device for neutralizing the CO₂-injected ballast water in the ballast water tank, a water quality sensor module for measuring the acidity of the CO₂-injected ballast water in the ballast water tank; and, a control device for discharging the ballast water to the outside ocean of the ship through an outlet of the ballast water tank when the measured acidity satisfies a preset reference value indicating that the ballast water has been neutralized.

In an embodiment the adsorbent included in the adsorbent module is composed of an amine-based or Cu²⁺ complex-based solid adsorbent.

In an embodiment the energy-saving offshore direct air capture and ocean carbon sequestration system further comprises a waste heat recovery device connected to the funnel of the ship, which recovers waste heat from the engine and generator of the ship through the funnel and supplies the recovered waste heat to the regeneration chamber.

In an embodiment the regeneration chamber regenerates the adsorbent by separating the captured CO₂ from the saturated adsorbent in the adsorbent module using the waste heat.

In an embodiment, in the reaction unit, the supplied CO₂ is injected into the ballast water and dissolved, and is stabilized by chemically bonding with the supplied alkali substance.

In an embodiment the alkali substance is NaOH or Ca(OH)₂, and the NaOH or Ca(OH)₂ is stabilized by bonding with the CO₂ to form NaHCO₃ or CaCO₃.

In an embodiment the electrolytic ballast water treatment device removes residual alkali substances and copper ions eluted from a catalyst in the CO₂-injected ballast water of the ballast water tank. The catalyst is either included in or added to the electrolytic ballast water treatment system. In addition to using alkaline substances, this embodiment of the system also removes copper ions generated by the catalyst for the purpose of neutralizing the treated ballast water.

The energy-saving offshore direct air capture and ocean carbon sequestration system according to an embodiment of the present invention captures CO₂ from the air using headwinds during ship navigation and dissolves the captured CO₂ into seawater using the ship's ballast water, thereby serving as a marine carbon neutrality technology with higher energy efficiency and lower cost compared to conventional land-based direct air capture systems.

Furthermore, in addition to its value as a response measure to international greenhouse gas emission regulations for ships, such as those by the IMO, it also offers potential for economic utilization in the carbon emissions trading market, and possesses high commercial scalability through integration with future autonomous ship and eco-friendly ship technologies.

### BRIEF DESCRIPTION OF THE DRAWINGS

FIG. 1 is a diagram schematically illustrating the configuration of an energy-saving offshore direct air capture and ocean carbon sequestration system according to an embodiment of the present invention.
FIG. 2 is a diagram schematically illustrating the application of the energy-saving offshore direct air capture and ocean carbon sequestration system of FIG. 1 to a ship, according to an embodiment of the present invention.

### DETAILED DESCRIPTION

Singular expressions used herein include plural expressions unless the context clearly indicates otherwise. In the present specification, terms such as "comprise" or "include" should not be construed as necessarily including all of the various components or steps described herein, but should be construed such that some of the components or steps may not be included or additional components or steps may be further included. In addition, terms such as "... part" and "module" described herein refer to a unit that processes at least one function or operation, which may be implemented in hardware or software, or in a combination of hardware and software.

Hereinafter, various embodiments of the present disclosure will be described in detail with reference to the accompanying drawings.

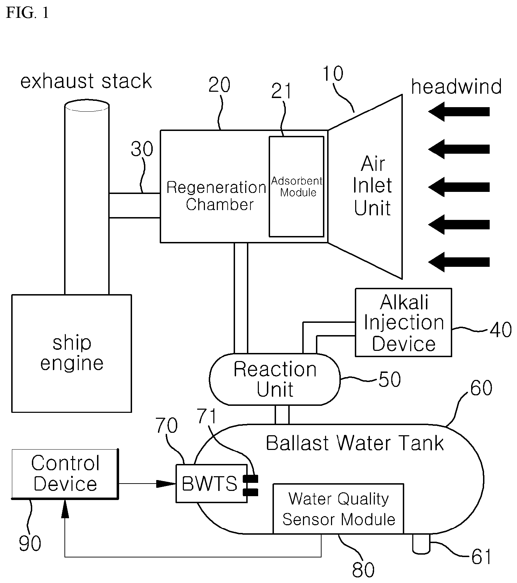

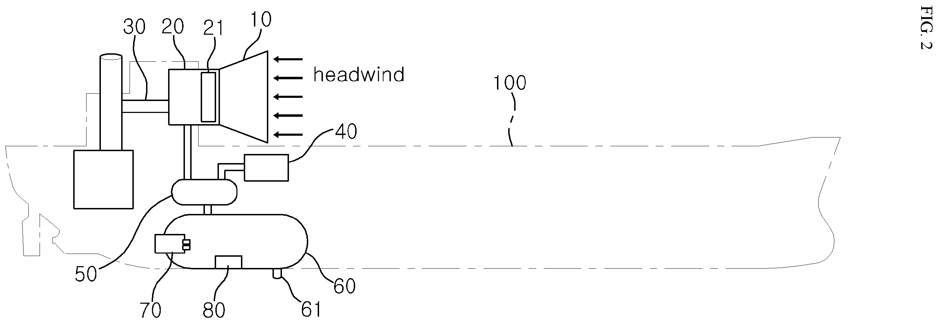

FIG. 1 is a diagram schematically illustrating the configuration of an energy-saving offshore direct air capture and ocean carbon sequestration system according to an embodiment of the present invention, and FIG. 2 is a diagram schematically illustrating the application of the energy-saving offshore direct air capture and ocean carbon sequestration system of FIG. 1 to a ship, according to an embodiment of the present invention. Hereinafter, with reference to FIGS. 1 and 2, the energy-saving offshore direct air capture and ocean carbon sequestration system according to an embodiment of the present invention will be described.

Referring to FIGS. 1 and 2, the energy-saving offshore direct air capture and ocean carbon sequestration system according to an embodiment of the present invention may include: an air inlet unit 10, a regeneration chamber 20, an adsorbent module 21, a waste heat recovery device 30, an alkali injection device 40, a reaction unit 50, a ballast water tank 60, an electrolytic ballast water treatment device 70, a water quality sensor module 80, and a control device 90.

The air inlet unit 10 is installed such that its opening faces the wind direction, including the bow of the ship 100, allowing outside air to be drawn into the system by headwinds during the ship's navigation.

The regeneration chamber 20 is connected to the air inlet unit 10 and receives the outside air introduced through the air inlet unit 10.

Here, an adsorbent module 21 is installed inside the regeneration chamber 20, and it can be arranged in such a way that the outside air introduced through the air inlet unit 10 is directly delivered to it.

Through this configuration, the adsorbent module 21 captures CO₂ from the incoming air, allowing for efficient atmospheric CO₂ capture without the need for an additional fan.

For example, the adsorbent included in the adsorbent module 21 may be composed of an amine-based or Cu²⁺ complex-based solid adsorbent.

Furthermore, the regeneration chamber 20 regenerates the adsorbent by separating the captured CO₂ from the saturated adsorbent in the adsorbent module 21 using the waste heat from the ship's 100 engine and generator.

The waste heat recovery device 30 is connected to the funnel of the ship 100 and recovers waste heat from the ship's engine and generator through the funnel, supplying the recovered waste heat to the regeneration chamber 20.

For example, the regeneration chamber 20 may use steam heated to a temperature of 80-120°C by the waste heat supplied from the waste heat recovery device 30 to separate CO₂ from the adsorbent, thereby regenerating the adsorbent.

The alkali injection device 40 supplies an alkaline substance to the reaction unit 50.

For example, the alkaline substance may include NaOH or Ca(OH)₂.

The reaction unit 50 is connected to the ballast water tank 60, storing a portion of the ballast water. It receives the CO₂ captured from the regeneration chamber 20 via piping and the alkaline substance from the alkali injection device 40.

Here, the supplied CO₂ is injected into the ballast water and becomes solubilized, then chemically binds with the alkaline substance and becomes stabilized.

For instance, the alkaline substances NaOH or Ca(OH)₂ may bind with CO₂ to form NaHCO₃ or CaCO₃ for stabilization.

The ballast water tank 60 stores ballast water and receives the CO₂-injected ballast water from the reaction unit 50.

The electrolytic ballast water treatment device 70 uses a pair of electrodes 71 to remove residual alkaline substances (e.g., NaOH) and copper ions (Cu²⁺) eluted from catalysts in the CO₂-injected ballast water of the ballast water tank 60.

This process minimizes the environmental impact of discharging the treated ballast water into the ocean.

The water quality sensor module 80 measures the acidity (pH) of the CO₂-injected ballast water in the ballast water tank 60.

The control device 90 discharges the ballast water from the ballast water tank 60 to the external ocean via the discharge outlet 61 of the ship 100 when the measured acidity satisfies a preset threshold, indicating that the ballast water has been neutralized.

The embodiment of the present invention described above is disclosed for illustrative purposes only, and various modifications, alterations, and additions may be made by those skilled in the art within the spirit and scope of the present invention. Such modifications, alterations, and additions should be considered to fall within the scope of the following claims.

### Description of Reference Numerals

10: Air Inlet Unit
20: Regeneration Chamber
21: Adsorbent Module
30: Waste Heat Recovery Device
40: Alkali Injection Device
50: Reaction Unit
60: Ballast Water Tank
70: Electrolytic Ballast Water Treatment Device
80: Water Quality Sensor Module
90: Control Device

## Claims

1. An energy-saving offshore direct air capture and ocean carbon sequestration system comprises:
an air inlet portion (10) installed such that an opening thereof faces the wind direction including the bow of the ship (100), configured for allowing external air to be introduced inside through headwinds during the navigation of the ship;
a regeneration chamber (20) connected to the air inlet portion (10) and configured for receiving external air introduced through the air inlet portion;
an adsorbent module (21) installed inside the regeneration chamber (20) and configured for capturing CO₂ from the air;
a reaction unit (50) configured for storing part of the ballast water and for receiving the captured CO₂ from the regeneration chamber via piping, and for receiving the alkali substance from the alkali injection device;
an alkali injection device (40) configured for supplying an alkali substance to the reaction unita ballast water tank (60) connected to the reaction unit (50) and configured for receiving the ballast water into which CO₂ has been injected from the reaction unit;
an electrolytic ballast water treatment device (70) configured for neutralizing the CO₂-injected ballast water in the ballast water tank;
a water quality sensor module (80) configured for measuring the acidity of the CO₂-injected ballast water in the ballast water tank; and
a control device (90) configured for receiving signals from the water quality sensor module and for discharging the ballast water to the outside ocean of the ship through an outlet of the ballast water tank when the measured acidity satisfies a preset reference value, indicating that the ballast water has been neutralized.

2. The system according to claim 1, wherein the adsorbent of the adsorbent module (21) is composed of an amine-based or Cu²⁺ complex-based solid adsorbent.

3. The system according to any one of the preceding claims, wherein the system further comprises a waste heat recovery device (30) connected to the funnel of the ship (100), and configured for recovering waste heat from the engine and generator of the ship through the funnel, and for supplying the recovered waste heat to the regeneration chamber.

4. The system according to claim 3, wherein the regeneration chamber (20) is configured for regenerating the adsorbent by separating the captured CO₂ from the saturated adsorbent module using the waste heat.

5. The system according to any one of the preceding claims, wherein the reaction unit (20) is configured for injecting and dissolving the supplied CO₂ into the ballast water, and for stabilizing dissolved CO₂ by chemically binding with the supplied alkali substance.

6. The system according to any one of the preceding claims, wherein the alkali substance is NaOH or Ca(OH)₂, and the NaOH or Ca(OH)₂ is stabilized by binding with CO₂ to form NaHCO₃ or CaCO₃.

7. The system according to any one of the preceding claims, wherein the electrolytic ballast water treatment device (70) is configured for removing residual alkali substances and copper ions eluted from catalysts in the CO₂-injected ballast water of the ballast water tank.
